# EUROPÄISCHE PATENTSCHRIFT

(11) **EP 2 316 001 B1**
(45) Veröffentlichungstag und Bekanntmachung des Hinweises auf die Patenterteilung: **02.03.2016**
(21) Anmeldenummer: 09776978.0
(22) Anmeldetag: 06.07.2009
(51) Int. Cl.: G01C 19/56, G01C 19/5726

(54) **MESSVORRICHTUG MIT EINEM MIKROELEKTROMECHANISCHEN KAPAZITIVEN SENSOR**
MEASURING DEVICE WITH A MICRO-ELECTROMECHANICAL CAPACITIVE SENSOR
DISPOSITIF DE MESURE COMPORTANT UN CAPTEUR CAPACITIF MICROÉLECTROMÉCANIQUE

(30) Priorität: 07.07.2008 DE 102008031609
(43) Veröffentlichungstag der Anmeldung: 04.05.2011
(73) Patentinhaber: Albert-Ludwigs-Universität Freiburg, 79098 Freiburg (DE)
(72) Erfinder: HE, Lin, Wuxi City 214063 (CN); MANOLI, Yiannos, 79104 Freiburg (DE); BUHMANN, Alexander, 79110 Freiburg (DE); TASCHWER, Armin, 68240 Sigolsheim (FR); NORTHEMANN, Thomas, 79106 Freiburg (DE)
(74) Vertreter: Huwer, Andreas
(86) Internationale Anmeldenummer: PCT/EP2009/004868
(87) Internationale Veröffentlichungsnummer: WO 2010/003612

(56) Entgegenhaltungen:
- US-B1- 6 250 156
- JOHN A GEEN; STEVEN J SHERMAN; JOHN F CHANG; STEPHEN R LEWIS: "Single-Chip Surface Micromachined Integrated Gyroscope With 50[deg.]/h Allan Deviation" IEEE JOURNAL OF SOLID-STATE CIRCUITS, IEEE SERVICE CENTER, PISCATAWAY, NJ, US, Bd. 37, Nr. 12, 1. Dezember 2002 (2002-12-01), XP011065896 ISSN: 0018-9200

## Beschreibung

Die Erfindung betrifft eine Messvorrichtung mit mindestens einem mikroelektromechanischen kapazitiven Sensor, der zur Messung einer mechanischen Auslenkung einer Prüfmasse aufeinander zu und voneinander weg bewegbare Elektroden aufweist, mit einem Ladungsintegrator, der einen Operationsverstärker aufweist, der mindestens einen mit dem Sensor verbundenen Verstärkereingang und wenigstens einen Verstärkerausgang hat, der über mindestens einen Integrationskondensator mit dem Verstärkereingang rückgekoppelt ist.

Eine derartige Messvorrichtung ist aus Geen, J. et al. "Single-Chip Surface Micro-machined Integrated Gyroscope With 50°/h Allan Deviation", IEEE Journal of Solid-State Circuits, Band 37, Nr. 12 (2002), Seiten 1860-1866 bekannt. Die Messvorrichtung ist Teil eines Gyroskops, das eine Prüfmasse aufweist, die aus einer Ruhelage entgegen einer Federkraft einer ersten Feder in Richtung einer ersten Achse und rechtwinklig dazu entgegen einer Federkraft einer zweiten Feder in Richtung einer zweiten Achse auslenkbar ist. Das Gyroskop hat einen elektromechanischen Oszillator, der eine Anregungseinrichtung aufweist, mittels der die Prüfmasse in Richtung der ersten Achse in eine Primärschwingung versetzt wird. Die Bewegung der Prüfmasse in Richtung der ersten Achse wird mit Hilfe eines primären kapazitiven Sensors gemessen. Mittels einer Rückkopplungsschleife wird in Abhängigkeit von dem so erhaltenen Messsignal eine Rechteckspannung erzeugt und an einen die Prüfmasse antreibenden kapazitiven Aktor angelegt. Die Phasenlage der Rechteckspannung wird dabei so gewählt, dass die Prüfmasse mit der Resonanzfrequenz des aus der ersten Feder und der Prüfmasse gebildeten Primärresonators schwingt.

Eine Drehung der Prüfmasse um eine rechtwinklig zu der ersten Achse und der zweiten Achse verlaufende Rotationsachse erzeugt eine Coriolis-Kraft, die eine Sekundärschwingung der Prüfmasse in Richtung der zweiten Achse bewirkt. Die entsprechende Auslenkung wird mit Hilfe eines sekundären kapazitiven Sensors gemessen. Da die Coriolis-Auslenkung der Prüfmasse Heiner als 2 A ist, wird das Messsignal des sekundären Sensors verstärkt. Der sekundäre Sensor ist dazu mit einem Verstärkereingang eines Operationsverstärkers verbunden, dessen Verstärkerausgang zur Bildung eines Ladungsintegrators über einen Integrationskondensator zum Verstärkereingang rückgekoppelt ist. Parallel zum Integrationskondensator ist eine Source-Drain-Strecke eines Feldeffekttransistors geschaltet, die einen Gigaohm-Widerstand bildet und einer Verschiebung des Gleichspannungspotentials am Verstärkereingang entgegenwirkt. Durch den Widerstand wird verhindert, dass der Operationsverstärker aufgrund einer vorhandenen Eingangsoffsetspannung in die Begrenzung gerät. In der Praxis kommt es jedoch vor, dass die Messvorrichtung nicht optimal auf den Primärresonator abgestimmt ist. Die Messempfindlichkeit des Gyroskops ist daher noch verbesserungsfähig.

Es besteht deshalb die Aufgabe, eine Messvorrichtung der eingangs genannten Art zu schaffen, die eine hohe Messempfindlichkeit ermöglicht.

Diese Aufgabe wird dadurch gelöst, dass der mindestens eine Verstärkereingang über einen hochohmigen elektrischen Widerstand mit einem Anschluss für ein elektrisches Gleichtakt-Referenzpotential verbunden ist, dass der Operationsverstärker zusätzlich zu dem mindestens einen Verstärkereingang wenigstens einen Hilfseingang aufweist, und dass der Verstärkerausgang über einen Tiefpass mit dem wenigstens einen Hilfseingang verbunden ist.

In vorteilhafter Weise ist es dadurch möglich, das Gleichtakt-Referenzpotential auf einen vorbestimmten Wert zu legen und dadurch die Resonanzfrequenz des aus der Prüfmasse und einer Feder, gegen deren Rückstellkraft die Prüfmasse in Bewegungsrichtung der aufeinander zu und voneinander weg bewegbaren Elektroden auslenkbar ist, einzustellen. Bei einer Messvorrichtung, die zur Messung der Coriolis-Auslenkung in einem Gyroskop dient, kann dadurch die Resonanzfrequenz des aus der Prüfmasse und der Feder gebildeten Sekundäroszillators an die Resonanzfrequenz des Primärresonators angepasst werden. Da aufgrund der mit dem Gleichtakt-Referenzpotential verbunden Widerstände ein Rücksetzen des Integrationskondensators nicht erforderlich ist, kann der Integrationskondensator unterbrechungsfrei für die Messung genutzt werden. Die Messvorrichtung ermöglicht außerdem einen definierten Gleichspannungspegel am Ausgang des Operationsverstärkers. Ferner ist sie unempfindlich gegenüber einer Offsetspannung des Sensors. Der Arbeitspunkt des Operationsverstärkers wird mit einem tiefpassgefilterten Signal eingestellt, so dass der dem Hilfseingang zugeordnete Schaltungsteil des Operationsverstärkers niederfrequent ausgelegt sein kann.

Die erfindungsgemäße Messvorrichtung ist nicht auf eine Verwendung in einem Gyroskop beschränkt. Vielmehr kann sie auch bei anderen kapazitiven mikroelektromechanischen Systemen (MEMS) zum Einsatz kommen, wie z.B. einem Beschleunigungssensor oder einem Mikröfon. Das Gleichtakt-Referenzpotential kann ggf. programmierbar sein. Der Widerstandswert des hochohmigen Widerstands liegt vorzugsweise im Gigaohmbereich. Der erfindungsgemäße Ladungsintegrator Weist im Vergleich zu einem Transimpedanzverstärker ein sehr geringes Rauschen auf und ermöglicht dadurch eine entsprechend geringe Stromaufnahme der Messvorrichtung. Die Messvorrichtung ist deshalb gut für Batteriebetrieb geeignet, beispielsweise wenn sie in ein tragbares Gerät eingebaut ist. Ein niedriges Rauschen und eine geringe Stromaufnahme kann auch dadurch erreicht werden, dass der Ladungsintegrator als zeitkontinuierlicher Ladungsintegrator ausgestaltet ist. Gegenüber einem getakteten, zeitdiskreten Ladungsintegrator entfällt dadurch das Faltungsrauschen.

Da das Gleichtakt-Signal am Verstärkerausgang vom Gleichtakt-Referenzpotential am Verstärkereingang entkoppelt ist, kann der Operationsverstärker eine teleskopische Schaltungsstruktur aufweisen.

Vorteilhaft ist, wenn der hochohmige elektrische Widerstand durch einen FET, insbesondere einen MOSFET gebildet ist, der mit seiner Source-Drain-Strecke den Verstärkereingang mit dem Anschluss für das Gleichtakt-Referenzpotential verbindet und mit seinem Gate an einer Steuerspannung anliegt. Der hochohmige Widerstand kann dadurch kostengünstig und Platz sparend zusammen mit dem Operationsverstärker und ggf. weiteren elektrischen Schaltungskomponenten in einen Halbleiterchip integriert werden.

Zweckmäßigerweise ist die Steuerspannung kleiner als die Schwellenspannung des MOSFETs. Dadurch wird ein sehr hochohmiger elektrischer Widerstand ermöglicht.

Bei einer bevorzugten Ausgestaltung der Erfindung weist die Messvorrichtung zum Erzeugen der Steuerspannung eine Spannungsquelle auf, deren Quellenausgang mit dem Gate des MOSFETs verbunden ist, wobei, die Spannungsquelle einen Steuereingang hat, der derart mit dem Anschluss für das Gleichtakt-Referenzpotential in Steuerverbindung steht, dass beim Auftreten einer Änderung des Gleichtakt-Referenzpotentials der elektrische Widerstand der Source-Drain-Strecke des MOSFETs im Wesentlichen konstant bleibt. Das Gleichtakt-Referenzpotential kann dann auf einfache Weise verstellt werden, ohne den Wert des hochohmigen elektrischen Widerstands zu verändern.

Bei einer vorteilhaften Ausführungsform der Erfindung ist der kapazitive Sensor als differentieller Sensor mit einem nichtinvertierenden ersten Messsignalausgang und einem invertierenden zweiten Messsignalausgang und der Operationsverstärker als differentieller Operationsverstärker mit einem nichtinvertierenden ersten Verstärkereingang, einem invertierenden zweiten Verstärkereingang, einem nichtinvertierenden ersten Verstärkerausgang und einem invertierenden zweiten Verstärkerausgang ausgestaltet, wobei der erste Messsignalausgang mit dem ersten Verstärkereingang und der zweite Messsignalausgang mit dem zweiten Verstärkereingang verbunden ist, wobei der erste Verstärkerausgang über einen ersten Integrationskondensator mit dem zweiten Verstärkereingang und der zweite Verstärkerausgang über einen zweiten Integrationskondensator mit dem ersten Verstärkereingang rückgekoppelt ist, und wobei der erste Verstärkereingang über einen hochohmigen ersten Widerstand und der zweite Verstärkereingang über einen hochohmigen zweiten Widerstand mit dem Anschluss für das GleichtaktReferenzpotential verbunden ist. Die Messvorrichtung ist also als differentielle Messvorrichtung ausgestaltet und ermöglicht dadurch eine noch größere Messempfindlichkeit Die hochohmigen Widerstände weisen dabei bevorzugt etwa den gleichen Widerstandswert auf.

Zwekmäßigerweise weist der Operationsverstärker zusätzlich zu dem ersten Verstärkereingang einen ersten nichtinvertierenden Hilfseingang und zusätzlich zu dem zweiten Verstärkereingang einen zweiten invertierenden Hilfseingang auf, wobei der zweite Verstärkerausgang mit einem nichtinvertierenden ersten Eingangsanschluss eines Tiefpasses und der erste Verstärkerausgang mit einem invertierenden zweiten Eingangsanschluss des Tiefpasses verbunden ist, und wobei ein nichtinvertierender erster Ausgangsanschluss des Tiefpasses mit dem ersten Hilfseingang und ein invertierender zweiter Ausgangsanschluss des Tiefpasses mit dem zweiten Hilfseingang verbunden ist. Der Arbeitspunkt des Operationsverstärkers wird dabei mit Hilfe eines differentiellen, tiefpassgefilterten Signals eingestellt.

Es ist aber auch möglich, dass der Operationsverstärker zusätzlich zu dem ersten Verstärkereingang einen ersten nichtinvertierenden Hilfseingang und zusätzlich zu dem zweiten Verstärkereingang einen zweiten invertierenden Hilfseingang aufweist, wobei der erste Verstärkerausgang mit einem nichtinvertierenden ersten Eingangsanschluss eines Tiefpasses und der zweite Verstärkerausgang mit einem invertierenden zweiten Eingangsanschluss des Tiefpasses verbunden ist, und wobei ein invertierender erster Ausgangsanschluss des Tiefpasses mit dem ersten Hilfseingang und ein nichtinvertierender zweiter Ausgangsanschluss des Tiefpasses mit dem zweiten Hilfseingang verbunden ist. Auch bei dieser Ausgestaltung der Erfindung wird der Arbeitspunkt des Operationsverstärkers mittels eines differentiellen, tiefpassgefilterten Signals eingestellt.

Vorteilhaft ist, wenn der zweite Verstärkerausgang über ein erstes Widerstandselement mit dem ersten Eingangsanschluss des Tiefpasses und der erste Verstärkerausgang über einen zweites Widerstandselement mit dem zweiten Eingangsanschluss des Tiefpasses verbunden ist, und wenn der erste Eingangsanschluss des Tiefpasses über ein drittes Widerstandselement mit dem zweiten Eingangsanschluss des Tiefpasses verbunden ist. Das so gebildete Widerstandsnetzwerk ermöglicht eine Messvorrichtung, deren Ausgangssignal eine hohe Amplitude aufweist. Dadurch ist es sogar möglich, die Messvorrichtung zur Messung der Primärschwingung einer Prüfmasse in einem elektromechanischen Oszillator einzusetzen.

Zweckmäßigerweise hat der Tiefpass mindestens eine spannungsgesteuerte Stromquelle, deren Ausgang mit einem Integrationseingang eines Miller-Integrators verbunden ist. Der Tiefpass kann dadurch besser in einen Halbleiterchip integriert werden. Ein aufwändiger und teurer externer Kondensator kann dabei eingespart werden.

Bei einer bevorzugten Ausführungsform der Erfindung ist der erste Eingangsanschluss des Tiefpasses mit einem Eingang eines ersten Transconductors und der zweite Eingangsanschluss des Tiefpasses mit einem Eingang eines zweiten Transconductors verbunden, wobei der erste Ausgangsanschluss des Tiefpasses mit einem Ausgang des ersten Transconductors und der zweite Ausgangsanschluss des Tiefpasses mit einem Ausgang des zweiten Transconductors verbunden ist, und wobei der Ausgang des zweiten Transconductors über einen ersten Gegenkopplungszweig mit einem ersten Gegenkopplungsanschluss des ersten Transconductors und der Ausgang des ersten Transconductors über einen zweiten Gegenkopplungszweig mit einem zweiten Gegenkopplungsanschluss des ersten Transconductors verbunden ist. Die Messvorrichtung ermöglicht dadurch eine hohe Ausgangsamplitude und eine weitgehend lineare Verstärkung des Sensor-Messsignals.

Vorteilhaft ist, wenn der erste Ausgangsanschluss des Tiefpasses über einen ersten Pfad, der eine Source-Drain-Strecke eines ersten FETs und eine damit in Reihe geschaltete Stromquelle umfasst, mit einem Bezugspotentialanschluss verbunden ist, wenn der zweite Ausgangsanschluss des Tiefpasses über einen zweiten Pfad, der eine Source-Drain-Strecke eines zweiten FETs und eine damit in Reihe geschaltete weitere Stromquelle umfasst, mit dem Bezugspotentialanschluss verbunden ist, und wenn das Gate des ersten FETs und das Gate des zweiten FETs jeweils mit einer Ansteuereinrichtung verbunden sind, die derart ausgestaltet ist, dass die FETs unterhalb ihrer Schwellenspannung betrieben werden. Dadurch kann ein großer on-chip Kondensator für den Tiefpass vermieden werden.

Die erfindungsgemäße Messvorrichtung kann ein Teil eines Gyroskops sein, das eine an einer Halterung entlang einer ersten Achse und einer rechtwinklig dazu verlaufenden zweiten Achse auslenkbar gelagerte Prüfmasse aufweist, die mittels eines Schwingungserregers um eine Ruhelage in Richtung der ersten Achse in Schwingungen versetzbar ist, wobei der kapazitive Sensor derart mit der Prüfmasse zusammenwirkt, dass eine Auslenkung der Prüfmasse aus der Ruhelage in Richtung der zweiten Achse detektierbar ist. Das Gyroskop ermöglicht dann eine hohe Sensitivität, einen geringen Stromverbrauch und eine große Ausgangsamplitude.

Nachfolgend sind Ausführungsbeispiele der Erfindung anhand der Zeichnung näher erläutert. Es zeigt
- Fig. 1: eine schematische Darstellung eines Gyroskops, das einen elektromechanischen Oszillator und eine Messvorrichtung zur Messung einer durch eine Corioliskraft bewirkten Auslenkung einer Prüfmasse aufweist,
- Fig. 2: ein Schaltbild der Messvorrichtung,
- Fig. 3: ein Schaltbild einer Verstärkerschaltung für einen Ladungsintegrator, wobei die Verstärkerschaltung einen Operationsverstärker aufweist, dessen Ausgang über einen Tiefpass mit dem Verstärkereingang des Operationsverstärkers rückgekoppelt ist, und
- Fig. 4: ein Schaltbild eines Transkonduktanzverstärkers (Gm-Zelle) des Tiefpasses.

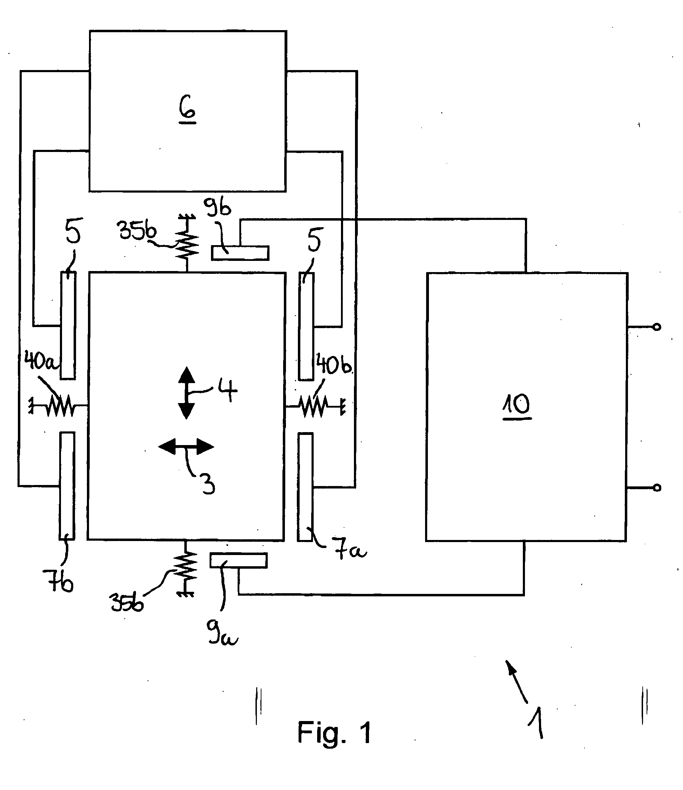

Ein in Fig. 1 im Ganzen mit 1 bezeichnetes Gyroskop hat eine Prüfmasse 2, die mikromechanisch an einer in der Zeichnung nicht näher dargestellten Halterung entlang einer ersten Achse 3 entgegen der Rückstellkraft eines Paar erster Federn 40a und entlang einer rechtwinklig dazu verlaufenden zweiten Achse 4 entgegen der Rückstellkraft eines Paar zweiter Federn 40b aus einer Ruhelage auslenkbar gelagert ist. Die Halterung kann beispielsweise ein Halbleiterchip sein, auf oder in dem die Prüfmasse 2 angeordnet ist.

Die Prüfmasse 2 kann mittels eines Schwingungserregers um die Ruhelage in Richtung der ersten Achse 3 in Schwingungen versetzt werden. Der Schwingungserreger weist kapazitive Aktoren 5 mit jeweils einer ersten und einer zweiten Elektrode auf Die erste Elektrode ist jeweils mit der Halterung und die zweite Elektrode jeweils mit der Prüfmasse 2 verbunden.

Zum Anlegen einer die Schwingung anregenden Wechselspannung sind die Elektroden der Aktoren 5 an Treiberausgängen einer Ansteuereinrichtung 6 angeschlossen. Die Ansteuereinrichtung 6 weist differentielle Messsignaleingänge auf, die zur Messung der Schwingungsbewegung der Prüfmasse 2 mit primären kapazitiven Sensoren 7a, 7b verbunden sind. In Fig. 1 ist erkennbar, dass die Prüfmasse 2 zwischen den primären Sensoren 7a, 7b angeordnet ist. Jeder primäre Sensor 7a, 7b hat jeweils eine mit der Prüfmasse 2 verbundene erste Elektrode und eine mit der Halterung verbundene zweite Elektrode.

Wenn die Prüfmasse 2 in Richtung der ersten Achse 3 aus ihrer Ruhelage verschoben wird, bewegen sich die Elektroden des einen primären Sensors 7a, 7b aufeinander zu und die Elektroden des anderen primären Sensors 7b, 7a voneinander weg. Dadurch ändern sich die Messsignale der primären Sensoren 7a, 7b in zueinander entgegengesetzte Richtungen.

In Abhängigkeit von den Messsignalen der primären Sensoren 7a, 7b wird mit Hilfe der Ansteuereinrichtung 6 die Phasenlage der an den Elektroden des Aktors 5 anliegenden Wechselspannung derart geregelt, dass die Prüfmasse mit einer Resonanzfrequenz in Richtung der ersten Achse 3 um die Ruhelage schwingt.

Wenn die Halterung und damit die Lage der Prüfmasse 2 um eine normal zur ersten Achse 3 und zur zweiten Achse 4 angeordnete Rotationsachse verdreht wird, tritt an der Prüfmasse 2 eine Corioliskraft auf, die in Richtung der zweiten Achse 4 wirkt und die Prüfmasse 2 entgegen der Rückstellkräfte der zweiten Federn 40b in Richtung der zweiten Achse 4 aus der Ruhelage auslenkt.

Zur Messung dieser Auslenkung weist das Gyroskop 1 eine Messvorrichtung 8 auf, die zwei sekundäre mikroelektromechanische kapazitive Sensoren 9a, 9b und eine damit verbundene Auswerteschaltung 10 umfasst. In Fig. 1 ist erkennbar, dass die Prüfmasse 2 zwischen den sekundären Sensoren 9a, 9b angeordnet ist. Jeder sekundäre Sensor 9a, 9b hat jeweils eine mit der Prüfmasse 2 verbundene erste Elektrode und eine mit der Halterung verbundene zweite Elektrode.

Wenn die Prüfmasse 2 in Richtung der zweiten Achse 4 aus ihrer Ruhelage verschoben wird, bewegen sich die Elektroden des einen sekundären Sensors 9a, 9b aufeinander zu und die Elektroden des anderen sekundären Sensors 9b, 9a voneinander weg. Dadurch ändern sich die Messsignale der sekundären Sensoren 9b, 9a in zueinander entgegengesetzte Richtungen.

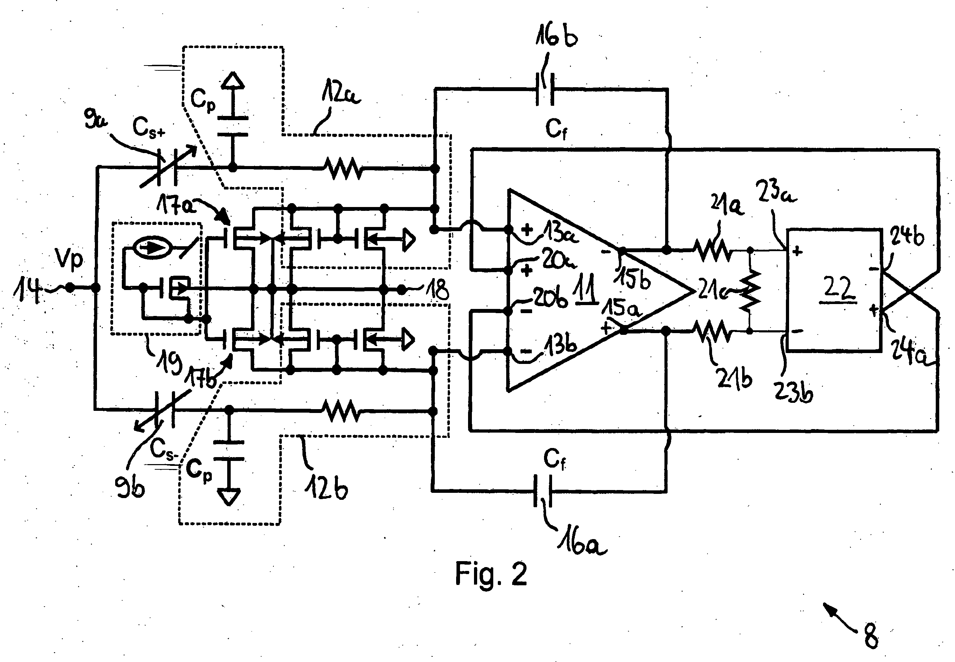

Wie in Fig. 2 erkennbar ist, ist eine einen ersten Messsignalausgang bildende erste Elektrode eines ersten sekundären Sensors 9a über eine erste Schutzschaltung 12a mit einem nichtinvertierenden Verstärkereingang 1 3a eines Operationsverstärkers 11 verbunden. Eine zweite Elektrode des ersten sekundären Sensors 9a ist mit einem Anschluss 14 für ein Bezugspotential verbunden.

In entsprechender Weise ist eine einen zweiten Messsignalausgang bildende erste Elektrode eines zweiten sekundären Sensors 9b über eine zweite Schutzschaltung 12b mit einem invertierenden Verstärkereingang 1 3b des Operationsverstärkers 11 verbunden. Eine zweite Elektrode des zweiten sekundären Sensors 9b ist mit dem Anschluss 14 für das Bezugspotential verbunden.

Der Operationsverstärker 11 ist Teil eines Ladungsintegrators. Ein nichtinvertierender Verstärkerausgang 15a ist dazu über einen ersten Integrationskondensator 16a mit dem invertierenden Verstärkereingang 13b rückgekoppelt. Ein invertierender Verstärkerausgang 15b ist über einen zweiten Integrationskondensator 16b mit dem nichtinvertierenden Verstärkereingang 13a rückgekoppelt. Deutlich ist erkennbar, dass weder zu dem ersten Integrationskondensator 16a noch zu dem zweiten Integrationskondensator 16b ein elektrischer Widerstand parallel geschaltet ist.

Der nichtinvertierende Verstärkereingang 1 3a ist über einen ersten elektrischen Widerstand 17a mit einem Anschluss 18 für ein elektrisches Gleichtakt-Referenzpotential verbunden. In entsprechender Weise ist der invertierende Verstärkereingang 13b über einen zweiten elektrischen Widerstand 17b mit dem Anschluss 18 für das elektrische Gleichtakt-Referenzpotential verbunden.

Die Widerstände 17a, 17b sind jeweils durch die Source-Drain-Strecke eines MOSFETs gebildet. Die Gateelektroden der MOSFETs sind mit einer Spannungsquelle 19 verbunden, die eine Steuerspannung bereitstellt, die betragsmäßig kleiner ist als die Schwellenspannung des MOSFETs.

Das Gleichtakt-Referenzpotential ist einstellbar und wird mit Hilfe einer in der Zeichnung nicht dargestellten Referenzspannungsquelle erzeugt. Durch Verändern des Gleichtakt-Referenzpotentials kann die Resonanzfrequenz des aus den zweiten Federn 40b und der Prüfmasse gebildeten Sekundäroszillators auf die Resonanzfrequenz des aus den ersten Federn 40a und der Prüfmasse 2 gebildeten Primärresonators abgestimmt werden. Dadurch wird eine hohe Sensitivität der Messvorrichtung 8 ermöglicht.

Der Operationsverstärker 11 weist zusätzlich zu dem nichtinvertierenden Verstärkereingang 1 3a einen nichtinvertierenden Hilfseingang 20a und zusätzlich zu dem invertierenden Verstärkereingang 1 3b einen invertierenden Hilfseingang 20b auf. Der invertierende Verstärkerausgang 15b ist über ein erstes Widerstandselement 21 a mit einem nichtinvertierenden Eingangsanschluss 23a eines Tiefpasses 22 verbunden. Der nichtinvertierende Verstärkerausgang 15a ist über ein zweites Widerstandselement 21 b mit einem invertierenden Eingangsanschluss 23b des Tiefpasses verbunden. Ein drittes Widerstandselement 21c verbindet den nichtinvertierenden Eingangsanschluss 23a mit dem invertierenden Eingangsanschluss 23b des Tiefpasses. Dadurch wird eine größere Ausgangsamplitude des Operationsverstärkers 11 ermöglicht.

Zur Einstellung des Arbeitspunkts des Operationsverstärkers 11 ist ein nichtinvertierender Ausgangsanschluss 24a des Tiefpasses 22 mit dem nichtinvertierenden Hilfseingang 20a des Operationsverstärkers 11 und ein invertierender zweiter Ausgangsanschluss 24b des Tiefpasses 22 mit dem invertierenden Hilfseingang 20b des Operationsverstärkers 11 verbunden.

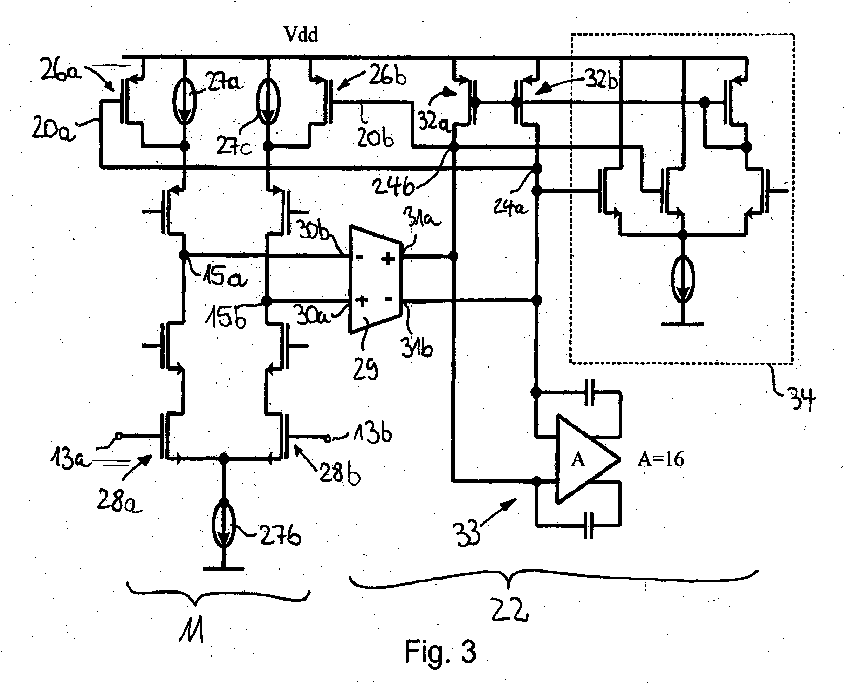

In Fig. 3 ist erkennbar, dass der nichtinvertierende Hilfseingang 20a des Operationsverstärkers 11 durch das Gate eines ersten MOSFET 26a gebildet ist, zu dessen Source-Drain-Strecke eine erste Stromquelle 27a parallel geschaltet ist. Die Source des ersten MOSFETs 26a ist mit einem ersten Versorgungsspannungsanschluss verbunden. Mit der Source-Drain-Strecke des MOSFETs 26a ist die Source-Drain-Strecke eines zweiten MOSFET 28a in Reihe geschaltet, dessen Gate den invertierenden Verstärkereingang 1 3b bildet. In einem die Drain des ersten MOSFETs 26a mit der Drain des zweiten MOSFETs 28a verbindenden ersten Schaltungszweig ist der nichtinvertierende Verstärkerausgang 15a angeordnet. Die Source des zweiten MOSFETs 28a ist über eine zweite Stromquelle 27b mit einem zweiten Versorgungsspannungsanschluss verbunden.

Der invertierende Hilfseingang 20b des Operationsverstärkers 11 ist durch das Gate eines dritten MOSFET 26b gebildet, zu dessen Source-Drain-Strecke eine dritte Stromquelle 27c parallel geschaltet ist. Die Source des dritten MOSFETs 26b ist mit dem ersten Versorgungsspannungsanschluss verbunden. Mit der Source-Drain-Strecke des dritten MOSFETs 26b ist die Source-Drain-Strecke eines vierten MOSFETs 28b in Reihe geschaltet, dessen Gate den nichtinvertierenden Verstärkereingang 13a bildet. In einem die Drain des dritten MOSFETs 26b mit der Drain der vierten MOSFETs 28b verbindenden zweiten Schaltungszweig ist der invertierende Verstärkerausgang 15b angeordnet. Die Source des vierten MOSFETs 28b ist über die zweite Stromguelle 27b mit dem zweiten Versorgungsspannungsanschluss verbunden.

In Fig. 3 ist außerdem erkennbar, dass der Tiefpass 22 eine spannungsgesteuerte Stromquelle 29 (Gm-Zelle) mit einem nichtinvertierenden Eingang 30a und einem invertierenden Eingang 30b aufweist. Der nichtinvertierende Eingang 30a ist am invertierenden Verstärkerausgang 15b und der invertierende Eingang 30b am nichtinvertierenden Verstärkerausgang 15a angeschlossen.

Die spannungsgesteuerte Stromquelle 29 weist ferner einen nichtinvertierenden Ausgang 31a und einen invertierenden Ausgang 31b auf. Der nichtinvertierende Ausgang 31 a ist über die Source-Drain-Strecke eines fünften MOSFETs 32a mit dem ersten Versorgungsspannungsanschluss und der invertierende Ausgang 31 b ist über die Source-Drain-Strecke eines sechsten MOSFETs 32b mit dem ersten Versorgungsspannungsanschluss verbunden. Der nichtinvertierende Ausgang 31a ist an einem ersten Eingang eines Millerintegrators 33 und der invertierende Ausgang 31b an einem zweiten Eingang des Millerintegrators 33 angeschlossen. Die beiden Ausgänge 31a, 31 b sind außerdem jeweils mit einem Anschluss einer Hilfsschaltung 34 verbunden. An der Hilfsschaltung 34 sind auch die Gates des fünften MOSFETs 32a und sechsten MOSFETs 32b angeschlossen.

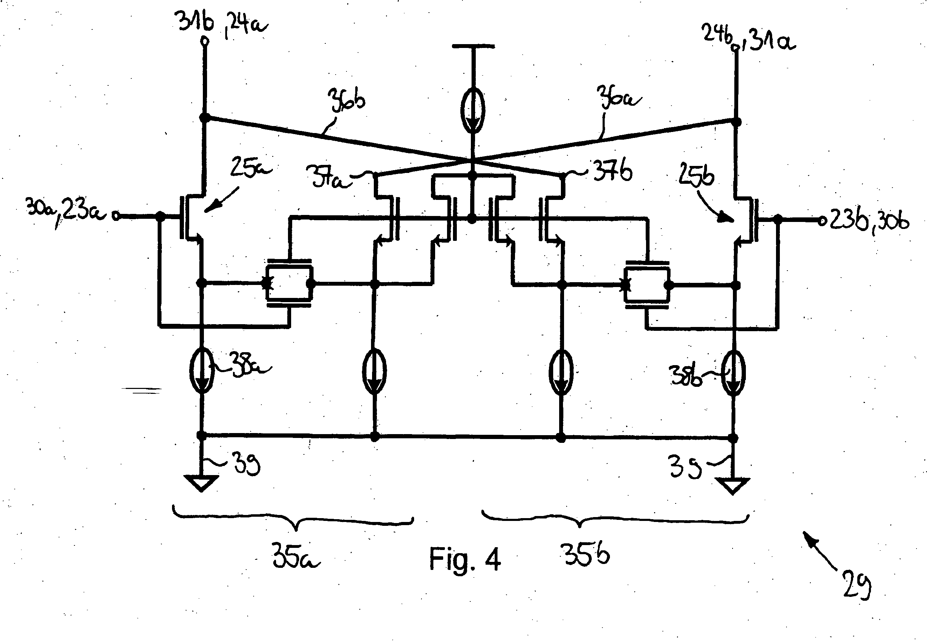

In Fig. 4 ist erkennbar, dass die spannungsgesteuerte Stromquelle 29 einen ersten Transconductor 35a und einen zweiten Transconductor 35b aufweist. Der nichtinvertierende Eingangsanschluss 23a des Tiefpasses 22 ist mit einem Eingang des ersten Transconductors 35a und der invertierende Eingangsanschluss 23b des Tiefpasses 22 ist mit einem Eingang des zweiten Transconductors 35b verbunden.

Der nichtinvertierende Ausgangsanschluss 24a des Tiefpasses 22 ist mit dem nichtinvertierenden Ausgang 31 a des ersten Transconductors 35a und der invertierende Ausgangsanschluss 24b des Tiefpasses 22 mit dem invertierenden Ausgang 31 b des zweiten Transconductors 35b verbunden. Der Ausgang 31 b des zweiten Transconductors 35b ist über einen ersten Gegenkopplungszweig 36a mit einem ersten Gegenkopplungsanschluss 37a des ersten Transconductors 35a und der Ausgang 31 a des ersten Transconductors 35a über einen zweiten Gegenkopplungszweig 36b mit einem zweiten Gegenkopplungsanschluss 37b des zweiten Transconductors 35b verbunden. Durch die Gegenkopplungen wird eine bessere Linearisierung der Messsignale der sekundären Sensoren 9a, 9b ermöglicht.

Der Ausgang 31 a ist über einen ersten Pfad, der eine Source-Drain-Strecke eines ersten FETs 25a und eine damit in Reihe geschaltete vierte Stromquelle 38a umfasst, mit einem Bezugspotentialanschluss 39 verbunden. Der Ausgang 31 b ist über einen zweiten Pfad, der eine Source-Drain-Strecke eines zweiten FETS 25b und eine damit in Reihe geschaltete fünfte Stromquelle 38b umfasst, mit dem Bezugspotentialanschauss 39 verbunden. Das Gate des ersten FETs 25a und das Gate des zweiten FETs 25b sind jeweils mit einer Ansteuereinrichtung verbunden, die derart ausgestaltet ist, dass die FETs 25a, 25b unterhalb ihrer Schwellenspannung betrieben werden.

## Patentansprüche

1. Messvorrichtung (8) mit mindestens einem mikroelektromechanischen kapazitiven Sensor (9a, 9b), der zur Messung einer mechanischen Auslenkung einer Prüfmasse (2) aufeinander zu und voneinander weg bewegbare Elektroden aufweist, mit einem Ladungsintegrator, der einen Operationsverstärker (11) aufweist, der mindestens einen mit dem Sensor (9a, 9b) verbundenen Verstärkereingang (13a, 13b) und wenigstens einen Verstärkerausgang (15a, 15b) hat, der über mindestens einen Integrationskondensator (16a, 16b) mit dem Verstärkereingang (13a, 13b) rückgekoppelt ist, **dadurch gekennzeichnet, dass** der mindestens eine Verstärkereingang (13a, 13b) über einen hochohmigen elektrischen Widerstand (17a, 17b) mit einem Anschluss (18) für ein elektrisches Gleichtakt-Referenzpotential verbunden ist, wobei des Anschluss (18) mit einer Referensspannungsquelle verbinden ist, dass der Operationsverstärker (11) zusätzlich zu dem mindestens einen Verstärkereingang (13a, 13b) wenigstens einen Hilfseingang (20a, 20b) aufweist, und dass der Verstärkerausgang (15a, 15b) über einen Tiefpass (22) mit dem wenigstens einen Hilfseingang (20a, 20b) verbunden ist.

2. Messvorrichtung (8) nach Anspruch 1, **dadurch gekennzeichnet, dass** der hochohmige elektrische Widerstand (17a, 17b) durch einen FET, insbesondere einen MOSFET gebildet ist, der mit seiner Source-Drain-Strecke den Verstärkereingang (13a, 13b) mit dem Anschluss für das Gleichtakt-Referenzpotential verbindet und mit seinem Gate an einer Steuerspannung anliegt.

3. Messvorrichtung (8) nach Anspruch 2, **dadurch gekennzeichnet, dass** die Steuerspannung keiner als die Schwellenspannung des MOSFETs ist.

4. Messvorrichtung (8) nach einem der Ansprüche 2 bis 3, **dadurch gekennzeichnet, dass** sie zum Erzeugen der Steuerspannung eine Spannungsquelle (19) aufweist, deren Quellenausgang mit dem Gate des MOSFETs verbunden ist, und dass die Spannungsquelle (19) eine Steuereingang hat, der derart mit dem Anschluss (18) für das Gleichtakt-Referenzpotential in Steuerverbindung steht, dass beim Auftreten einer Änderung des GleichtaktReferenzpotentials der elektrische Widerstand der Source-Drain-Strecke des MOSFETs im Wesentlichen konstant bleibt.

5. Messvorrichtung (8) nach einem der Ansprüche 1 bis 4, **dadurch gekennzeichnet, dass** der kapazitive Sensor (9a, 9b) als differentieller Sensor mit einem nichtinvertierenden ersten Messsignalausgang und einem invertierenden zweiten Messsignalausgang und der Operationsverstärker (11) als differentieller Operationsverstärker (11) mit einem nichtinvertierenden ersten Verstärkereingang (13a), einem invertierenden zweiten Verstärkereingang (1 3b), einem nichtinvertierenden ersten Verstärkerausgang (15a) und einem invertierenden zweiten Verstärkerausgang (15b) ausgestaltet ist, dass der erste Messsignalausgang mit dem ersten Verstärkereingang (1 3a) und der zweite Messsignalausgang mit dem zweiten Verstärkereingang (13b) verbunden ist, dass der erste Verstärkerausgang (15a) über einen ersten Integrationskondensator (16a) mit dem zweiten Verstärkereingang (1 3b) und der zweite Verstärkerausgang (15b) über einen zweiten Integrationskondensator (16b) mit dem ersten Verstärkereingang (1 3b) rückgekoppelt ist, und dass der erste Verstärkereingang (13a) über einen hochohmigen ersten Widerstand (9a) und der zweite Verstärkereingang (13b) über einen hochohmigen zweiten Widerstand (9b) mit dem Anschluss (18) für das Gleichtakt-Referenzpotential verbunden ist.

6. Messvorrichtung (8) nach einem der Ansprüche 1 bis 5, **dadurch gekennzeichnet, dass** der Operationsverstärker (11) zusätzlich zu dem ersten Verstärkereingang (13a) einen ersten nichtinvertierenden Hilfseingang (20a) und zusätzlich zu dem zweiten Verstärkereingang (13b) einen zweiten invertierenden Hilfseingang (20b) aufweist, dass der zweite Verstärkerausgang (15b) mit einem nichtinvertierenden ersten Eingangsanschluss (23a) des Tiefpasses (22) und der erste Verstärkerausgang (15a) mit einem invertierenden zweiten Eingangsanschluss (23b) des Tiefpasses (22) verbunden ist, und dass ein nichtinvertierender erster Ausgangsanschluss (24a) des Tiefpasses (22) mit dem ersten Hilfseingang (20a) und ein invertierender zweiter Ausgangsanschluss (24b) des Tiefpasses (22) mit dem zweiten Hilfseingang (20b) verbunden ist.

7. Messvorrichtung (8) nach einem der Ansprüche 1 bis 6, **dadurch gekennzeichnet, dass** der Operationsverstärker (11) zusätzlich zu dem ersten Verstärkereingang (13a) einen ersten nichtinvertierenden Hilfseingang (20a) und zusätzlich zu dem zweiten Verstärkereingang (13b) einen zweiten invertierenden Hilfseingang (20b) aufweist, dass der erste Verstärkerausgang (15a) mit einem nichtinvertierenden ersten Eingangsanschluss (23a) eines Tiefpasses (11) und der zweite Verstärkerausgang (15b) mit einem invertierenden zweiten Eingangsanschluss (23b) des Tiefpasses verbunden ist, und dass ein invertierender erster Ausgangsanschluss des Tiefpasses (24b) mit dem ersten Hilfseingang (29a) und ein nichtinvertierender zweiter Ausgangsanschluss (24a) des Tiefpasses (22) mit dem zweiten Hilfseingang (20b) verbunden ist.

8. Messvorrichtung (8) nach einem der Ansprüche 1 bis 7, **dadurch gekennzeichnet, dass** der zweite Verstärkerausgang (15b) über einen erstes Wiederstandselement (21a) mit dem ersten Eingangsanschluss (23a) des Tiefpasses (22) und der erste Verstärkerausgang (15a) über einen zweites Widerstandselement (21b) mit dem zweiten Eingangsanschluss (23b) des Tiefpasses (22) verbunden ist, und dass der erste Eingangsanschluss (2 3a) des Tiefpasses (22) über ein drittes Widerstandselement (21 c) mit dem zweiten Eingangsanschluss (23b) des Tiefpasses (22) verbunden ist.

9. Messvorrichtung (8) nach einem der Ansprüche 1 bis 8, **dadurch gekennzeichnet, dass** der Tiefpass (22) mindestens eine spannungsgesteuerte Stromquelle (29) aufweist, deren Ausgang (31a, 31 b) mit einem Integrationseingang eines Miller-Integrators (33) verbunden ist.

10. Messvorrichtung (8) nach einem der Ansprüche 1 bis 9, **dadurch gekennzeichnet, dass** der erste Eingangsanschluss (23a) des Tiefpasses (22) mit einem Eingang eines ersten Transconductors (35a) und der zweite Eingangsanschluss des Tiefpasses (23b) mit einem Eingang eines zweiten Transconductors (35b) verbunden ist, dass der erste Ausgangsanschluss (24a) des Tiefpasses (22) mit einem Ausgang (31 a) des ersten Transconductors (35a) und der zweite Ausgangsanschluss (24b) des Tiefpasses (22) mit einem Ausgang des zweiten Transconductors (35b) verbunden ist, und dass der Ausgang (31 b) des zweiten Transconductors (35b) über einen ersten Gegenkopplungszweig (36a) mit einem ersten Gegenkopplungsanschluss (37a) des ersten Transconductors (35a) und der Ausgang (31 a) des ersten Transconductors (35a) über einen zweiten Gegenkopplungszweig (36a) mit einem zweiten Gegenkopplungsanschluss (37b) des zweiten Transconductors (35b) verbunden ist.

11. Messvorrichtung (8) nach einem der Ansprüche 1 bis 10, **dadurch gekennzeichnet, dass** der erste Ausgangsanschluss (24a) des Tiefpasses (22) über einen ersten Pfad, der eine Source-Drain-Strecke eines ersten FETs (25a) und eine damit in Reihe geschaltete Stromquelle (38a) umfasst, mit einem Bezugspotentialanschluss (39) verbunden ist, dass der zweite Ausgangsanschluss (24b) des Tiefpasses (22) über einen zweiten Pfad, der eine Source-Drain-Strecke eines zweiten FETS (25b) und eine damit in Reihe geschaltete weitere Stromquelle (38b) umfasst, mit dem Bezugspotentialanschluss (39) verbunden ist, und dass das Gate des ersten FETs (25a) und das Gate des zweiten FETs (25b) jeweils mit einer Ansteuereinrichtung verbunden sind, die derart ausgestaltet ist, dass die FETs (25a, 25b) unterhalb ihrer Schwellenspannung betrieben werden.

12. Gyroskop (1) mit einer Messvorrichtung (8) nach einem der Ansprüche 1 bis 11, mit einer an einer Halterung entlang einer ersten Achse (3) und einer rechtwinklig dazu verlaufenden zweiten (4) Achse auslenkbar gelagerten Prüfmasse (2), die mittels eines Schwingungserregers um eine Ruhelage in Richtung der ersten Achse (3) in Schwingungen versetzbar ist, wobei der kapazitive Sensor (9a, 9b) derart mit der Prüfmasse (2) zusammenwirkt, dass eine Auslenkung der Prüfmasse (2) aus der Ruhelage in Richtung der zweiten Achse (4) detektierbar ist.

## Claims

1. Measuring device (8) comprising at least one microelectromechanical capacitive sensor (9a, 9b) having electrodes that are movable towards one another and away from one another for the purpose of measuring a mechanical deflection of a test mass (2), comprising a charge integrator having an operational amplifier (11), which has at least one amplifier input (13a, 13b) connected to the sensor (9a, 9b) and at least one amplifier output (15a, 15b) coupled with feedback to the amplifier input (13a, 13b) via at least one integration capacitor (16a, 16b), **characterized in that** the at least one amplifier input (13a, 13b) is connected to a terminal (18) for an electrical common-node reference potential via a high-resistance electrical resistor (17a, 17b), the terminal (18) being connected to a reference voltage source, **in that** the operational amplifier (11) has at least one auxiliary input (20a, 20b) in addition to the at least one amplifier input (13a, 13b), and **in that** the amplifier output (15a, 15b) is connected to the at least one auxiliary input (20a, 20b) via a low-pass filter (22).

2. Measuring device (8) according to Claim 1, **characterized in that** the high-resistance electrical resistor (17a, 17b) is formed by a FET, in particular a MOSFET, which, by means of its source-drain path connects the amplifier input (13a, 13b) to the terminal for the common-node reference potential and, by means of its gate, is connected to a control voltage.

3. Measuring device (8) according to Claim 2, **characterized in that** the control voltage is less than the threshold voltage of the MOSFET.

4. Measuring device (8) according to either of Claims 2 and 3, **characterized in that** it has a voltage source (19) for generating the control voltage, the source output of said voltage source being connected to the gate of the MOSFET, and **in that** the voltage source (19) has a control input, which is control-connected to the terminal (18) for the common-node reference potential in such a way that when a change in the common-node reference potential occurs, the electrical resistance of the source-drain path of the MOSFET remains substantially constant.

5. Measuring device (8) according to any of Claims 1 to 4, **characterized in that** the capacitive sensor (9a, 9b) is configured as a differential sensor having a non-inverting first measurement signal output and an inverting second measurement signal output, and the operational amplifier (11) is configured as a differential operational amplifier (11) having a non-inverting first amplifier input (13a), an inverting second amplifier input (13b), a non-inverting first amplifier output (15a) and an inverting second amplifier output (15b), **in that** the first measurement signal output is connected to the first amplifier input (13a) and the second measurement signal output is connected to the second amplifier input (13b), **in that** the first amplifier output (15a) is coupled with feedback to the second amplifier input (13b) via a first integration capacitor (16a) and the second amplifier output (15b) is coupled with feedback to the first amplifier input (13b) via a second integration capacitor (16b), and **in that** the first amplifier input (13a) is connected to the terminal (18) for the common-node reference potential via a high-resistance first resistor (9a) and the second amplifier input (13b) is connected to the terminal (18) for the common-node reference potential via a high-resistance second resistor (9b).

6. Measuring device (8) according to any of Claims 1 to 5, **characterized in that** the operational amplifier (11) has a first non-inverting auxiliary input (20a) in addition to the first amplifier input (13a) and a second inverting auxiliary input (20b) in addition to the second amplifier input (13b), **in that** the second amplifier output (15b) is connected to a non-inverting first input terminal (23a) of the low-pass filter (22) and the first amplifier output (15a) is connected to an inverting second input terminal (23b) of the low-pass filter (22), and **in that** a non-inverting first output terminal (24a) of the low-pass filter (22) is connected to the first auxiliary input (20a) and an inverting second output terminal (24b) of the low-pass filter (22) is connected to the second auxiliary input (20b).

7. Measuring device (8) according to any of Claims 1 to 6, **characterized in that** the operational amplifier (11) has a first non-inverting auxiliary input (20a) in addition to the first amplifier input (13a) and a second inverting auxiliary input (20b) in addition to the second amplifier input (13b), **in that** the fist amplifier output (15a) is connected to a non-inverting first input terminal (23a) of a low-pass filter (11) and the second amplifier output (15b) is connected to an inverting second input terminal (23b) of the low-pass filter, and **in that** an inverting first output terminal of the low-pass filter (24b) is connected to the first auxiliary input (20a) and a non-inverting second output terminal (24a) of the low-pass filter (22) is connected to the second auxiliary input (20b).

8. Measuring device (8) according to any of Claims 1 to 7, **characterized in that** the second amplifier output (15b) is connected to the first input terminal (23a) of the low-pass filter (22) via a first resistance element (21a) and the first amplifier output (15a) is connected to the second input terminal (23b) of the low-pass filter (22) via a second resistance element (21b), and **in that** the first input terminal (23a) of the low-pass filter (22) is connected to the second input terminal (23b) of the low-pass filter (22) via a third resistance element (21c).

9. Measuring device (8) according to any of Claims 1 to 8, **characterized in that** the low-pass filter (22) has at least one voltage-controlled current source (29), the output (31a, 31b) of which is connected to an integration input of a Miller integrator (33).

10. Measuring device (8) according to any of Claims 1 to 9, **characterized in that** the first input terminal (23a) of the low-pass filter (22) is connected to an input of a first transconductor (35a) and the second input terminal of the low-pass filter (23b) is connected to an input of a second transconductor (35b), **in that** the first output terminal (24a) of the low-pass filter (22) is connected to an output (31a) of the first transconductor (35a) and the second output terminal (24b) of the low-pass filter (22) is connected to an output of the second transconductor (35b), and **in that** the output (31b) of the second transconductor (35b) is connected to a first negative feedback terminal (37a) of the first transconductor (35a) via a first negative feedback branch (36a) and the output (31a) of the first transconductor (35a) is connected to a second negative feedback terminal (37b) of the second transconductor (35b) via a second negative feedback branch (36a).

11. Measuring device (8) according to any of Claims 1 to 10, **characterized in that** the first output terminal (24a) of the low-pass filter (22) is connected to a reference potential terminal (39) via a first path comprising a source-drain path of a first FET (25a) and a current source (38a) connected in series therewith, **in that** the second output terminal (24b) of the low-pass filter (22) is connected to the reference potential terminal (39) via a second path comprising a source-drain path of a second FET (25b) and a further current source (38b) connected in series therewith, and **in that** the gate of the first FET (25a) and the gate of the second FET (25b) are in each case connected to a drive device configured in such a way that the FETs (25a, 25b) are operated below their threshold voltage.

12. Gyroscope (1) comprising a measuring device (8) according to any of Claims 1 to 11, comprising a test mass (2) mounted on a mount in a deflectable manner along a first axis (3) and a second axis (4), running at right angles thereto, which test mass can be caused to effect oscillations around a rest position in the direction of the first axis (3) by means of an oscillation excitation unit, the capacitive sensor (9a, 9b) interacting with the test mass (2) in such a way that a deflection of the test mass (2) from the rest position in the direction of the second axis (4) is detectable.

## Revendications

1. Dispositif de mesure (8) comportant au moins un capteur capacitif micro-électromécanique (9a, 9b) qui comprend des électrodes mobiles de manière à se rapprocher l'une vers l'autre et à s'éloigner l'une de l'autre pour mesurer une déviation mécanique d'une masse d'épreuve (2), comportant un intégrateur de charge qui comprend un amplificateur opérationnel (11) ayant au moins une entrée d'amplificateur (13a, 13b) connectée au capteur (9a, 9b) et au moins une sortie d'amplificateur (15a, 15b) qui est renvoyée par l'intermédiaire d'au moins un condensateur d'intégration (16a, 16b) à l'entrée d'amplificateur (13a, 13b), **caractérisé en ce que** l'au moins une entrée d'amplificateur (13a, 13b) est connectée par l'intermédiaire d'une résistance électrique de forte valeur (17a, 17b) à une borne (18) destinée à un potentiel de référence de mode commun électrique, dans lequel la borne (18) est connectée à une source de tension de référence, **en ce que** l'amplificateur opérationnel (11) comprend en outre au moins une entrée auxiliaire (20a, 20b) en plus de l'au moins une entrée d'amplificateur (13a, 13b), et **en ce que** la sortie d'amplificateur (15a, 15b) est connectée par l'intermédiaire d'un filtre passe-bas (22) à l'au moins une entrée auxiliaire (20a, 20b).

2. Dispositif de mesure (8) selon la revendication 1, **caractérisé en ce que** la résistance électrique de forte valeur (17a, 17b) est constituée par un transistor FET, notamment un transistor MOSFET, qui connecte l'entrée d'amplificateur (13a, 13b) à la borne destinée au potentiel de référence de mode commun par l'intermédiaire de sa section source-drain et qui est appliqué par sa grille à une tension de commande.

3. Dispositif de mesure (8) selon la revendication 2, **caractérisé en ce que** la tension de commande est inférieure à une tension de seuil du MOSFET.

4. Dispositif de mesure (8) selon l'une quelconque des revendications 2 à 3, **caractérisé en ce que**, pour générer la tension de commande, il comprend une source de tension (19) dont la sortie de source est connectée à la grille du MOSFET, et **en ce que** la source de tension (19) comporte une entrée de commande qui est en liaison de commande avec la borne (18) destinée au potentiel de référence de mode de mode commun de manière à ce que, lorsqu'il se produit une variation du potentiel de référence de mode commun, la résistance électrique de la section source-drain du MOSFET reste sensiblement constante.

5. Dispositif de mesure (8) selon l'une quelconque des revendications 1 à 4, **caractérisé en ce que** le capteur capacitif (9a, 9b) est réalisé sous la forme d'un capteur différentiel comportant une première sortie de signal de mesure non inverseuse et une deuxième sortie de signal de mesure inverseuse et **en ce que** l'amplificateur opérationnel (11) est réalisé sous la forme d'un amplificateur opérationnel différentiel (11) comportant une première entrée d'amplificateur non inverseuse (13a), une deuxième entrée d'amplificateur inverseuse (13b), une première sortie d'amplificateur non inverseuse (15a) et une deuxième sortie d'amplificateur inverseuse (15b), **en ce que** la première sortie de signal de mesure est connectée à la première entrée d'amplificateur (13a) et **en ce que** la deuxième sortie de signal de mesure est connectée à la deuxième entrée d'amplificateur (13b), **en ce que** la première sortie d'amplificateur (15a) est renvoyée par l'intermédiaire d'un premier condensateur d'intégration (16a) à la deuxième entrée d'amplificateur (13b) et **en ce que** la deuxième sortie d'amplificateur (15b) est renvoyée par l'intermédiaire d'un deuxième condensateur d'intégration (16b) à la première entrée d'amplificateur (13b), et **en ce que** la première entrée d'amplificateur (13a), par l'intermédiaire d'une première résistance de forte valeur (9a), et la deuxième entrée d'amplificateur (13b), par l'intermédiaire d'une deuxième résistance (9b) de forte valeur, sont connectées à la borne (18) destinée au potentiel de référence de mode commun.

6. Dispositif de mesure (8) selon l'une quelconque des revendications 1 à 5, **caractérisé en ce que** l'amplificateur opérationnel différentiel (11) comprend en plus de la première entrée d'amplificateur (13a) une première entrée auxiliaire non inverseuse (20a) et en plus de la deuxième entrée d'amplificateur (13b), une deuxième entrée auxiliaire inverseuse (20b), **en ce que** la deuxième sortie d'amplificateur (15b) est connectée à une première borne d'entrée non inverseuse (23a) du filtre passe-bas (22) et **en ce que** la première sortie d'amplificateur (15a) est connectée à une deuxième borne d'entrée inverseuse (23b) du filtre passe-bas (22), et **en ce qu'**une première borne de sortie non inverseuse (24a) du filtre passe-bas (22) est connectée à la première entrée auxiliaire (20a) et **en ce qu'**une deuxième borne de sorite inverseuse (24b) du filtre passe-bas (22) est connectée à la deuxième entrée auxiliaire (20b).

7. Dispositif de mesure (8) selon l'une quelconque des revendications 1 à 6, **caractérisé en ce que** l'amplificateur opérationnel (11) comprend en plus de la première entrée d'amplificateur (13a) une première entrée auxiliaire non inverseuse (20a) et en plus de la deuxième entrée d'amplificateur (13b), une deuxième entrée auxiliaire inverseuse (20b), **en ce que** la première sortie d'amplificateur (15a) est connectée à une première borne d'entrée non inverseuse (23a) d'un filtre passe-bas (11) et **en ce que** la deuxième sortie d'amplificateur (15b) est connectée à une deuxième borne d'entrée inverseuse (23b) du filtre passe-bas, et **en ce qu'**une première borne de sortie inverseuse du filtre passe-bas (24b) est connectée à la première entrée auxiliaire (20a) et **en ce qu'**une deuxième borne de sortie non inverseuse (24a) du filtre passe-bas (22) est connectée à la deuxième entrée auxiliaire (20b).

8. Dispositif de mesure (8) selon l'une quelconque des revendications 1 à 7, **caractérisé en ce que** la deuxième sortie d'amplificateur (15b) est connectée par l'intermédiaire d'un premier élément de résistance (21a) à la première borne d'entrée (23a) du filtre passe-bas (22) et **en ce que** la première sortie d'amplificateur (15a) est connectée par l'intermédiaire d'un deuxième élément de résistance (21b) à la deuxième borne d'entrée (23b) du filtre passe-bas (22), et **en ce que** la première borne d'entrée (23a) du filtre passe-bas (22) est connectée par l'intermédiaire d'un troisième élément de résistance (21c) à la deuxième borne d'entrée (23b) du filtre passe-bas (22).

9. Dispositif de mesure (8) selon l'une quelconque des revendications 1 à 8, **caractérisé en ce que** le filtre passe-bas (22) comprend au moins une source de courant (24) commandée en tension dont la sortie (31a, 31b) est connectée à une entrée d'intégration d'un intégrateur de Miller (33).

10. Dispositif de mesure (8) selon l'une quelconque des revendications 1 à 9, **caractérisé en ce que** la première borne d'entrée (23a) du filtre passe-bas (22) est connectée à une entrée d'une première transconductance (35a) et **en ce que** la deuxième borne d'entrée du filtre passe-bas (23b) est connectée à une entrée d'une deuxième transconductance (35b), **en ce que** la première borne de sortie (24a) du filtre passe-bas (22) est connectée à une sortie (31a) de la première transconductance (35a) et **en ce que** la deuxième borne de sortie (24b) du filtre passe-bas (22) est connectée à une sortie de la deuxième transconductance (35b), et **en ce que** la sortie (31b) de la deuxième transconductance (35b) est connectée par l'intermédiaire d'une première branche de contre-réaction (36a) à une première borne de contre-réaction (37a) de la première transconductance (35a) et **en ce que** la sorite (31a) de la première transconductance (35a) est connectée par l'intermédiaire d'une deuxième branche de contre-réaction (36a) à une deuxième borne de contre-réaction (37b) de la deuxième transconductance (35b).

11. Dispositif de mesure (8) selon l'une quelconque des revendications 1 à 10, **caractérisé en ce que** la première borne de sortie (24a) du filtre passe-bas (22) est connectée par l'intermédiaire d'un premier trajet qui comprend ladite section source-drain d'un premier FET (25a) et une source de courant (38a) connectée en série avec celui-ci, à une borne de potentiel de référence (39), **en ce que** la deuxième borne de sortie (24b) du filtre passe-bas (22) est connectée par l'intermédiaire d'un deuxième trajet qui comprend ladite section source-drain d'un deuxième FET (25b) et une autre source de courant (38b) connectée en série avec celui-ci, à une borne de potentiel de référence (39), et **en ce que** la grille du premier FET (25a) et la grille du deuxième FET (25b) sont respectivement connectées à un dispositif de commande qui est réalisé de manière à ce que les FET (25a, 25b) soient attaqués en dessous de leur tension de seuil.

12. Gyroscope (1) comportant un dispositif de mesure (8) selon l'une quelconque des revendications 1 à 11, comportant une masse d'épreuve (2) pouvant être déviée disposée sur un support s'étendant le long d'un premier axe (3) et d'un deuxième axe (4) perpendiculaire à celui-ci, laquelle masse d'épreuve peut être mise en oscillation au moyen d'un dispositif d'excitation en oscillation autour d'une position de repos dans la direction du premier axe (3), dans lequel le capteur capacitif (9a, 9b) coopère avec la masse d'épreuve (2) de manière à ce qu'une déviation de la masse d'épreuve (2) par rapport à la position de repos dans la direction du deuxième axe (4) puisse être détectée.
